# EUROPÄISCHE PATENTANMELDUNG

(11) **EP 2 770 296 A1**
(43) Veröffentlichungstag der Anmeldung: **27.08.2014**
(21) Anmeldenummer: 13156550.9
(22) Anmeldetag: 25.02.2013
(51) Int. Cl.: G01B 11/25

(54) **Verfahren zur Objektmarkierung mittels 3D-Oberflächeninspektionssystem mittels 2D-Aufnahmen und Verfahren**

(71) Anmelder: Siemens Aktiengesellschaft, 80333 München (DE)
(72) Erfinder: Jahnke, Ronny, 14612 Falkensee (DE); Sczepurek, Tristan, 13129 Berlin (DE)

(57) **Zusammenfassung**

Durch die einfache Aufnahme von zweidimensionalen Bildern und Vergleich eines bekannten 3D-Modells kann durch Bestfit die dreidimensionale reale Struktur einer Komponente erfasst werden.

## Beschreibung

Die Erfindung betrifft ein Verfahren zur Objektmarkierung durch 3D-Oberflächeninspektionssystems mittels zweidimensionalen Aufnahmen.

Bei vielen Bauteilen ist eine 100%ige optische Prüfung der gesamten dreidimensionalen Bauteiloberflächen erforderlich. Dies umfasst z.B. bei Turbinenschaufeln die Lage der Kühlluftbohrungen und die vollständige Beschichtung.

Bekannte dreidimensionale Erfassungssysteme sind sehr zeitaufwändig und kostenintensiv.

Bei der Wanddickenmessung von hohlen Bauteilen mit komplexer Geometrie (wie bei Turbinenschaufeln) ist das Auffinden der vorgegebenen Messpositionen schwierig, da keine Bezüge Referenzflächen vorhanden sind. Wegen der komplexen Innenstruktur (aufgrund innerer Kühlrippen) ist die genaue (ca. 1 mm) Positionierung des Sensors bei der Wanddickenmessung jedoch zwingend erforderlich.
Bei dieser manuellen Prüfung müssen die Bauteile wegen ihrer Form und Größe mehrfach bewegt / gedreht werden, um alle Messpunkte erreichen zu können.

Bisher wurden für die Markierung der Messpunkte Schablonen aus Kunststoff oder Metall genutzt. Diese Schablonen haben Löcher an den einzelnen Messpositionen und ermöglichen nach Auflegen auf das Bauteil die Markierung der Messpunkte auf der Bauteiloberfläche mit einem Stift. Anschließend wird die Schablone wieder vom Bauteil entfernt und der Sensor an den markierten Positionen platziert. Nach Abschluss der Messungen werden die Markierungen wieder entfernt.

Es ist daher Aufgabe der vorliegenden Erfindung, diese Vorgehensweise zu vereinfachen.

Die Aufgabe wird gelöst durch ein System zur Objektmarkierung gemäß Anspruch 1, ein Verfahren zur Objektmarkierung gemäß Anspruch 11 und ein Vermessungs-Verfahren gemäß Anspruch 15.

Die Messpunkte werden mittels eines Projektors, insbesondere LED Projektor auf die Oberfläche der Komponente projiziert. Hierbei ist zu berücksichtigen, dass das Bauteil während der Prüfungen mehrfach bewegt oder gedreht werden muss, um alle Messpunkte zu erreichen. Die jeweils notwendige Bestimmung der Lage der Komponente erfolgt mittels einer einfachen Digitalkamera.

In den Unteransprüchen sind weitere vorteilhafte Maßnahmen aufgelistet, die beliebig miteinander kombiniert werden können, um weitere Vorteile zu erzielen.

Der Vorteil liegt in der einfachen Handhabung des Systems und der genaueren Messungen.

Es zeigen:
- Figur 1 - 7: Ausführungsbeispiele der Erfindung.
- Figur 8: eine Turbinenschaufel.

Die Beschreibung und die Figuren stellen nur Ausführungsbeispiele der Erfindung dar.

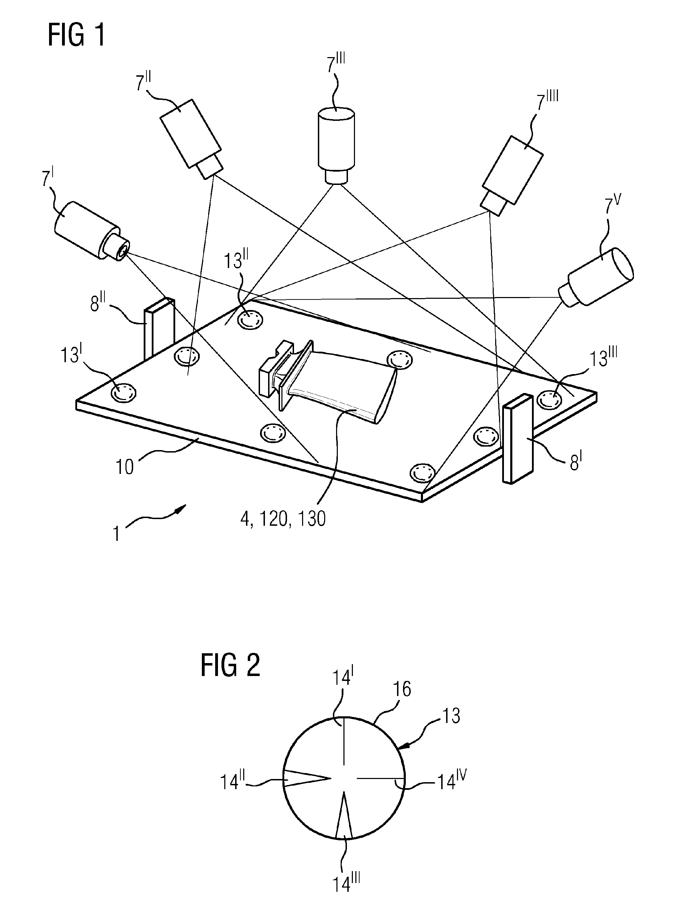

Figur 1 zeigt ein 3D-Oberflächeninspektionssystem 1.
Das 3D-Oberflächeninspektionssystem 1 weist einen Messtisch 10 auf, auf dem die zu untersuchende Komponente 4, 120, 130 vorhanden ist.

Um die Komponente 4, 120, 130 herum ist zumindest eine Kamera 7' vorhanden, deren Position verändert wird oder es werden mehrere Kameras 7', ..., 7^{V}, ..., die vorzugsweise fest installiert sind, verwendet.

Die Kameras 7', 7" sind so angeordnet, dass sie die gesamte Oberfläche der Komponente 4, 120, 130, die dem Messtisch 10 abgewandt ist, erfassen.

Die Installation der Kameras 7', 7'', ... kann je nach Typen von Komponenten variiert werden. Für Turbinenschaufeln 120, 130 verschiedener Größe, Typ (Lauf 120- oder Leitschaufel 130) kann eine gleiche, feste Installation von Kameras 7', 7'', ... verwendet werden.

Auf dem Messtisch 10 gemäß Figur 1 ist vorzugsweise zumindest eine Referenzmarke 13', 13'', ... (wie in Figuren 2 bis 6 dargestellt) vorhanden, hier vorzugsweise acht Referenzmarken.

Die 3D-Oberflächeninspektion läuft vorzugsweise wie folgt ab:
1. Bereitstellung von Anordnung aus Messtisch 10, Kamerasystem (ein oder mehrere Kameras 7', 7'', ...) und Beleuchtungseinrichtung 8', 8"
2. Referenzmarken 13 am Messtisch 10 anbringen oder Messtisch 10 weist diese schon auf
3. Positionierung der Komponente 4, 120, 130 auf dem Messtisch 10; am besten flach, wenn Komponente länglich ausgebildet ist
4. Aufnahme von Einzelbildern durch alle verwendeten, fest installierten Kameras 7', 7'', ... oder einer Kamera 7' in verschiedenen Positionen
5. Lageerkennung der Komponente 4, 120, 130 aus den Einzelbildern
6. Fein-Ausrichtung der Komponente zum bekannten 3D Modell durch Bestfit-Analyse
7. Mapping der Einzelbilder auf das zugehörige 3D Modell
8. Optimierung der überlappenden Bildbereiche durch Mittelung, Kontrasteinstellung oder Kantenschärfe
9. Komponenten 4, 120, 130 wenden und Wiederholung ab Schritt 3
10.Kombination von Einzelaufnahmen (2D) mit bekanntem hinterlegtem 3D Modell zur "3D-Kontur der Komponente".

Optional erfolgt die Oberflächenerfassung der Komponenten 4, 120, 130 mittels projizierter Lichtstruktur, insbesondere durch Streifen, so dass Kanten der Komponente 4, 120, 130 besser erfasst werden.

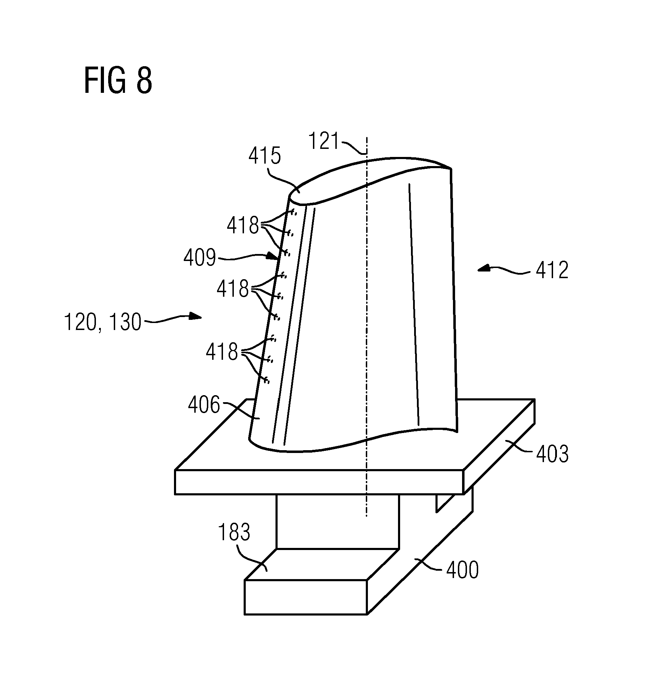

Optional erfolgt eine selektive Ausleuchtung der Komponente 4, 120, 130, insbesondere mittels Beamer, so dass stark reflektierende Bereiche nicht oder weniger beleuchtet werden. Dies ist bei Turbinenschaufeln 120, 130 z.B. der Schaufelfuß 183, 400 (Fig. 8).

Vorzugsweise erfolgt eine Fremdlichtunterdrückung durch monochromatische Beleuchtung und Bildauswertung

Vorzugsweise ist ein Ringlicht am Kameraobjektiv und/oder es wird eine seitliche Dunkelfeldbeleuchtung verwendet, um kleine Fehler wie Kratzer, Unebenheiten, Druckstellen hervorzuheben.

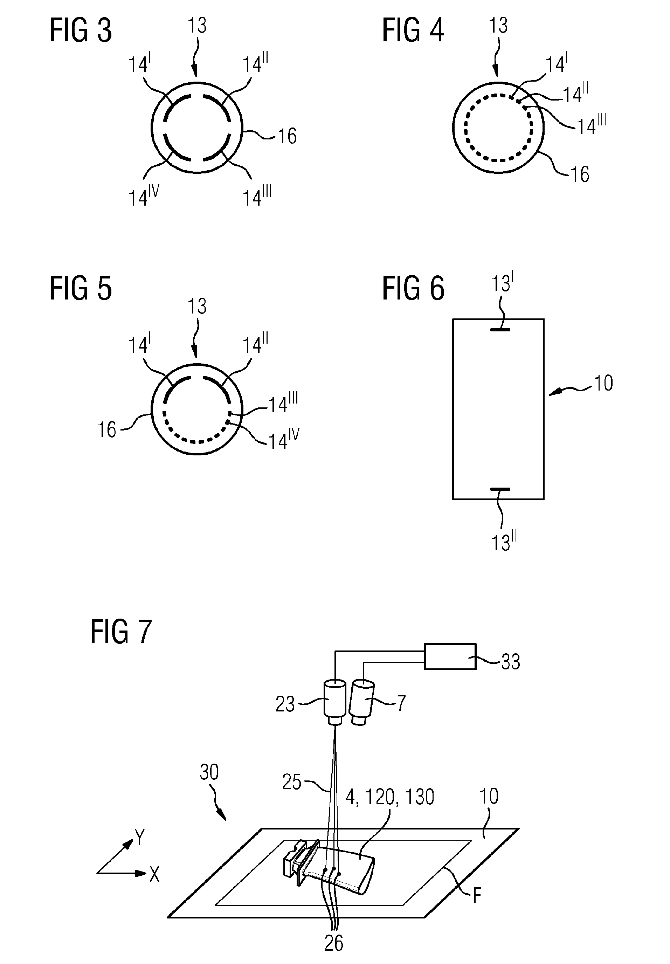

Die Referenzmarke 13, 13' ist vorzugsweise ringförmig ausgebildet und/oder angeordnet und weist Markierungen 14' - 14^{IV} auf. Die Markierungen 14', ... 14^{IV} können linienförmig oder punktförmig sein (Figur 3, 4, 5, 6).

Die Figuren 2 bis 6 zeigen verschiedene Referenzmarken, die auf dem Messtisch 10 angeordnet oder eingebracht sein können.

Figur 2 zeigt eine Referenzmarke 13 mit zwei linienförmigen Markierungen 14', 14'' sich radial von einer Kreislinie 16 erstrecken und zwei V-förmigen Markierungen 14'', 14''', deren Spitzen sich ebenfalls radial erstrecken. Die Reihenfolge der verschiedenen Markierungen 14', ..., 14^{IV} einer Referenzmarke 13 ist unerheblich (ebenso in Figur 5).

Figur 3 zeigt eine kreisförmige Struktur eines Referenzelements 13, die durch zumindest zwei, hier vier gebogene linienförmige Markierungen 14', ... 14^{IV} gebildet ist, die hier vorzugsweise eine kreisförmige Struktur bilden.

Die äußere geschlossene, kreisförmige Linie 16 kann vorhanden sein oder stellt nur eine gedachte Linie dar, die den Verlauf der Anordnungen der Markierungen 14', 14'', ... darstellt (Fig. 2 - 5)

Eine Alternative zu den linienförmigen Markierungen 14', 14'' gemäß Figur 3 stellen mehrere punktförmige Markierungen 14', 14'', ... gemäß Figur 4 ein Referenzelement 13, 13', 13'', ...dar, die ebenfalls eine Kreis- oder Ovalform bilden.

Ebenso ist eine Kombination aus linienförmigen und kreisförmigen (Punkte) Markierungen 14', 14'', ... denkbar, die vorzugsweise eine kreis- oder ovalförmige Struktur umschließen, wie es in Figur 5 dargestellt ist.
Die Markierungen 14', 14'', .... können auch quadratisch oder rechteckig angeordnet sein.

Figur 6 zeigt einen Messtisch 10, auf dem vorzugsweise zwei Referenzmarken 13', 13" angeordnet sind.
Die Referenzmarken 13, 13' sind hier linienförmige Elemente, die vorzugsweise an den Stirnseiten des Messtisches 10 angeordnet sind.

Ebenso können zumindest zwei oder vorzugsweise vier Referenzmarken 13, 13', 13", 13''' gemäß Figur 2, 3, 4, 5 oder 6 in den Ecken eines Messtisches 10 angeordnet sein (nicht dargestellt).

Optional kann eine mittels der Kamera 7', 7" erkennbare Kennzeichnung (Binärcodierung) der Referenzmarken 13', 13'', ... erfolgen.

Optional können auch die Referenzmarken mittels Beamer auf einen beliebigen Tisch projiziert und anschließend vermessen werden (Bandmaß). Diese Option ist vorzugsweise bei einem mobilen System ohne codierten Prüftisch zu verwenden.

Die Referenzmarken 13 dienen dazu, die Lage der Komponente 4, 120, 130 zu ermitteln, wenn deren Lage verändert wurde, insbesondere gedreht wurde (Schritt 9). Somit können die Aufnahmen der Komponente 4, 120, 130 von beiden Seiten miteinander verknüpft werden. Es werden keine Referenzmarken auf der Komponente 4, 120, 130 benötigt.

Vorteile sind:
● Keine 3D Vermessung der Komponente 4, 120, 130 erforderlich
● vollständige Erfassung der Oberfläche, da keine Verdeckung durch Einspannvorrichtung
● Freie Positionierung der Kameras möglich (Abgleich durch Referenzmarken)
● Keine zeitaufwändige 3D-Messung erforderlich
● Keine Verdeckung durch Referenzmarken auf dem Prüfling. Genaue Lagedarstellung aller Auffälligkeiten der Prüflingsoberfläche in 3D
● Nachträgliche Vermessung am 3D-Modell möglich
● Geringe Datenmengen « 10 MB) gegenüber üblichen 3D Aufnahmen (> 100 MB)
● Schnelle Darstellung der 2D Einzelbilder auf 3D Model.

Figur 7 zeigt ein erfindungsgemäßes System 30 zur Objektmarkierung.

Zusätzlich zu Figur 1 weist das System 30 einen Projektor 23 auf, der Strahlen 25 erzeugen und Markierungspunkte 26: 26', 26'' auf der Bauteilkomponente 120, 130, 4 erzeugen kann.

Das System 30 weist weiterhin vorzugsweise auf:

### - Messrechner

Der Messrechner 33 kann ein normaler Arbeitsplatzrechner, Laptop, Mikrocontroller oder eine spezielle Bildverarbeitungseinheit sein.

Im Messrechner 33 sind Referenzbilder für sämtliche Komponenten 4, 120, 130 sowie die zugehörigen Messpunktemuster 26: 26', 26'', ... hinterlegt. Diese beziehen sich auf die Referenzlage der Komponente 4, 120, 130 bei der Erstellung der Bilder.
Der Messrechner 33 ist mit einer Schnittstelle ausgestattet, die eine Bilderfassung über die Kamera 7 gestattet. Weiterhin ist der Messrechner 33 mit einer Schnittstelle ausgestattet, die eine Bildausgabe über den Projektor 23 gestattet.

### - Kamera-Projektor-Anordnung 7, 23

Kamera 7 und Projektor 23 sind vorzugsweise auf einer gemeinsamen Grundplatte angeordnet, die einen festen Winkel beider Komponenten zueinander gewährleistet. Beide 7, 23 sind fest über dem Messtisch 10 angeordnet. Die Anordnung wird so gewählt, dass eine Messfläche F (rechteckige Linie innerhalb Messtisch 10) sowohl vom Sichtfeld der Kamera 7 als auch vom Bildbereich des Projektors 23 vollständig abgedeckt werden kann. Die Anordnung von Kamera 7 und Projektor 23 kann vor jeder Messung durch Projektion eines Referenzmusters und Aufnahme desselben mit der Kamera 7 überprüft / justiert werden.

### - Bilderfassung

Die Komponente 120, 130, 4 liegt auf dem Messtisch 10. Hierbei wird ein Untergrund gewählt, von dem sich die Komponente optisch gut abhebt. Bei Bedarf kann die Komponente 120, 130, 4 mittels Projektor 23 mit variabler Helligkeitsverteilung ausgeleuchtet werden. Die Messfläche F mit der darin befindlichen Komponente 120, 130, 4 wird von einer Kamera 7 in einem Bild erfasst. Das Bild wird an den Messrechner 33 übertragen.

### - Bildverarbeitung

Das erfasste Bild wird im Messrechner 33 verarbeitet. Hierbei wird die Komponente im Bild identifiziert und dessen Lage innerhalb der Messfläche F bestimmt. Hierfür wird ein Bestfit auf das im Computer hinterlegte Referenzbild durchgeführt. Dabei werden die Verschiebungen X, Y sowie eine Verdrehung D ermittelt.

### - Projektion des Messpunktmusters 26

Das im Computer hinterlegte Messpunktmuster **26** wird rechnerisch um die Beträge X, Y, D verschoben/gedreht. Hieraus wird ein neues Projektionsbild errechnet:
Das Projektionsbild mit verschobenem / gedrehtem Messpunktmuster wird nun mittels Projektor 23 auf die Oberfläche der Komponente 4, 120, 130 projiziert.

### - Ermittelung eines Referenzbildes

Die Bauteilkomponente 4, 120, 130 wird innerhalb der Messfläche F platziert und gegebenenfalls mittels Projektor ausgeleuchtet.
Anschließend wird mittels Digitalkamera 7 das Referenzbild erzeugt. Alternativ wird das Referenzbild aus einem CAD-Modell erzeugt.

### - Ermittelung des Messpunktmusters 26: 26', 26"

1. Komponente 4, 120, 130 mit Messpunktmarkierungen Falls ein Referenzbauteil mit Messpunktmarkierungen vorhanden ist, können die markierten Messpunkte mittels Kamera 7, erfasst werden. Anschließend werden die Messpunkte 26: 26', 26" vorzugsweise mittels Bildverarbeitungsprogramm optimiert, zum Beispiel durch Kontrastanpassung oder Änderung der Farbe.
2. CAD Modell & Messpunktkoordinaten
Die Messpunkte werden in einem CAD-Programm auf der Oberfläche des CAD-Modells markiert. Anschließend wird die Komponente 4, 120, 130 in die Lage der realen Komponente 4, 120, 130 auf dem Messtisch 10 verschoben / gedreht. Die Messpunkte 26', 26'' werden nun in eine Bilddatei exportiert.

Die Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. System (30)
zur Objektmarkierung,
welches ein 3D-Oberflächeninspektionssystem (1) aufweist, das (1) zumindest aufweist:
einen Messtisch (10),
auf den (10) eine Komponente (4, 120, 130) zur 3D-Erfassung aufgelegt werden kann,
zumindest eine Kamera (7', 7'', ...) ,
insbesondere mehrere Kameras (7', 7'', ...),
die zweidimensionale Aufnahmen von der Komponente (4, 120, 130) tätigt oder tätigen,
einen Computer,
mit dem die zweidimensionalen Aufnahmen der Kameras (7', 7'', ...) mit einem hinterlegten 3D-Modell verglichen werden können und
mittels Bestfit von zweidimensionalen Aufnahmen und hinterlegtem 3D-Modell ein 3D-Modell der zu messenden Komponenten (4, 120, 130) ergibt,
zumindest einen Projektor (23),
insbesondere nur einen Projektor (23),
der Markierungen (26, 26', 26'', ...) oder ein Messpunktmuster auf der Komponente 4, 120, 130 erzeugen kann.

2. System nach Anspruch 1,
das zur Oberflächeninspektion eine Beleuchtung (8', 8'') aufweist,
die eine projizierte Lichtstruktur ermöglicht, insbesondere eine Streifenstruktur,
und/oder das eine Beleuchtung (8', 8'') aufweist,
die eine selektive Ausleuchtung der Komponente (4, 120, 130) ermöglicht.

3. System nach einem oder beiden der Ansprüche 1oder 2,
das eine Fremdlichtunterdrückung aufweist,
insbesondere durch monochromatische Beleuchtung und Bildauswertung.

4. System nach Anspruch 1,
das zumindest eine Referenzmarke (13', 13'', ...) aufweist, insbesondere mehrere Referenzmarken (13', 13'', ...),
ganz insbesondere bei dem der Messtisch (10) die Referenzmarken (13', 13'') aufweist.

5. System nach Anspruch 4,
bei dem die zumindest eine Referenzmarke (13', 13'', ...) mehrere Markierungen (14', 14'', ...) aufweist.

6. System nach einem oder beiden der Ansprüche 4 oder 5,
bei dem die Markierungen (14', 14'', ...) in gebogener Form, kreis- oder ovalförmig angeordnet sind.

7. System nach einem oder mehreren der Ansprüche 4, 5 oder 6,
bei dem die zumindest eine Referenzmarke (13', 13'', ...) gleiche oder verschieden geometrische Markierungen (14', 14'', ...),
insbesondere Striche oder Punkte,
aufweist.

8. System nach einem oder mehreren der Ansprüche 4, 5, 6 oder 7,
bei dem die Referenzmarken (13', 13'', ...) an den Stirnseiten des Messtisches (10) angeordnet sind.

9. System nach einem oder mehreren der Ansprüche 1 bis 9,
bei dem das Kameraobjektiv der Kamera (7') oder der Kameras (7', 7'') ein Ringlicht aufweist,
und/oder
das eine Beleuchtung (8, 8') aufweist,
die eine seitliche Dunkelfeldbeleuchtung ermöglicht.

10. System nach einem oder mehreren der vorherigen Ansprüche,
bei dem die Kameras (7', 7'', ...) fest installiert sind, insbesondere alle Kameras (7', 7'', ...).

11. Verfahren
zur dreidimensionalen Objektmarkierung einer Komponente (4, 120, 130),
bei dem insbesondere ein System (30) nach einem oder mehreren der Ansprüche 1 bis 10 verwendet wird,
bei dem eine Komponente (4, 120, 130) in verschiedenen Positionen,
insbesondere in zwei Positionen,
auf einem Messtisch (10) von Kameras (7', 7'', ...) zweidimensional erfasst wird und
durch ein Bestfit mit einem bekannten 3D-Modell der Komponente (4, 120, 130) die reale Dreidimensionalität der Komponente (4, 120, 130) bestimmt wird,
und ein Messpunktmuster (26: 26', 26", ...) zur Durchführung eines Messverfahrens an den Punkten des Messpunktmusters (26', 26'', ...) auf dem Bauteil (4, 120, 130) erzeugt wird.

12. Verfahren nach Anspruch 11,
bei dem die Lage der Komponente (4, 120, 130) einmal verändert wird,
insbesondere gewendet wird,
ganz insbesondere nur einmal.

13. Verfahren nach einem oder beiden der Ansprüche 11 oder 12,
bei dem Referenzmarken (13', 13'', ...) verwendet werden, um die Lage der Komponente (4, 120, 130) auf dem Messtisch (10) zu ermitteln,
nachdem deren (4, 120, 130) Lage auf dem Messtisch (10) verändert wurde, insbesondere gewendet wurde.

14. Verfahren nach einem oder mehreren der Ansprüche 11 bis 13,
bei dem
- eine Anordnung aus Messtisch (10), Kamerasystem, insbesondere ein oder mehrere Kameras (7', 7'', ...) und Beleuchtungseinrichtung 8', 8" bereitgestellt wird
- Referenzmarken (13) am Messtisch (10) angebracht werden oder Messtisch 10 weist diese schon auf
- eine der Komponente (4, 120, 130) auf dem Messtisch (10), am besten flach, wenn Komponente länglich ausgebildet ist, positioniert wird
- Einzelbildern durch alle verwendeten, fest installierten Kameras (7', 7'', ... ) oder einer Kamera (7') in verschiedenen Positionen aufgenommen werden
- eine Lageerkennung der Komponente (4, 120, 130) aus den Einzelbildern erfolgt
- Fein-Ausrichtung der Komponente zum bekannten 3D Modell durch Bestfit-Analyse erfolgt
- ein Mapping der Einzelbilder auf das zugehörige 3D Modell erfolgt
- eine Optimierung der überlappenden Bildbereiche durch Mittelung, Kontrasteinstellung oder Kantenschärfe erfolgt
- die Komponente (4, 120, 130) wird gewendet und Wiederholung ab Positionierung der Komponente (4, 120, 130) auf dem Messtisch (10)
- eine Kombination von Einzelaufnahmen (2D) mit bekannten hinterlegtem 3D Modell zur 3D-Kontur der Komponente (4, 120, 130) erfolgt.

15. Verfahren zur Vermessung von Komponenten (4, 120, 130),
bei dem ein Messpunktmuster (26, 26', 26'') auf der Komponente (4, 120, 130) erzeugt wird,
insbesondere nach einem Verfahren nach einem oder mehreren der Ansprüchen 11 bis 14,
ganz insbesondere mit einem System (30) nach einem Verfahren nach einem oder mehreren der Ansprüchen 1 bis 10,
und an dem Messpunkten des Messpunktmusters (26, 26', 26'') Messungen,
insbesondere Wanddickenmessungen,
durchgeführt werden.
